# EUROPÄISCHE PATENTSCHRIFT

(11) **EP 3 856 616 B1**
(45) Veröffentlichungstag und Bekanntmachung des Hinweises auf die Patenterteilung: **31.01.2024**
(21) Anmeldenummer: 19782933.6
(22) Anmeldetag: 25.09.2019
(51) Int. Cl.: G01D 5/14, B62D 15/02

(54) **WINKELSENSOR MIT ZWEIPOLIGEM MAGNET FÜR EINE KRAFTFAHRZEUGLENKUNG**
ANGLE SENSOR HAVING A TWO-POLE MAGNET FOR A MOTOR VEHICLE STEERING SYSTEM
CAPTEUR D'ANGLE COMPRENANT UN AIMANT BIPOLAIRE POUR UNE DIRECTION DE VÉHICULE À MOTEUR

(30) Priorität: 27.09.2018 DE 102018123885
(43) Veröffentlichungstag der Anmeldung: 04.08.2021
(73) Patentinhaber: thyssenkrupp Presta AG, 9492 Eschen (LI); thyssenkrupp AG, 45143 Essen (DE)
(72) Erfinder: PÁDÁR, Péter, 1031 Budapest (HU); VÉR, Ábel, 2083 Solymár (HU)
(74) Vertreter: thyssenkrupp Intellectual Property GmbH
(86) Internationale Anmeldenummer: PCT/EP2019/075833
(87) Internationale Veröffentlichungsnummer: WO 2020/064820

(56) Entgegenhaltungen:
- WO-A1-2008/077861
- DE-A1-102005 060 713
- DE-A1-102017 122 475
- JP-A- 2017 191 093
- US-A1- 2015 239 501

## Beschreibung

Die vorliegende Erfindung betrifft ein Verfahren zur Bestimmung eines korrigierten Drehwinkels der Drehlage einer drehbar gelagerten Lenkwelle eines Kraftfahrzeuges mit den Merkmalen des Oberbegriffs des Anspruchs 1, eine Winkelsensoreinheit mit den Merkmalen des Oberbegriffs des Anspruchs 5, eine elektromechanische Hilfskraftlenkung und eine Steer-by-Wire Lenkung für ein Kraftfahrzeug aufweisend die Winkelsensoreinheit.

Winkelsensoren werden in einem Kraftfahrzeug unteranderem dazu eingesetzt den Einschlagwinkel des Lenkrades zu messen. Derzeit verwendete Winkelsensoren sind magnetische Sensoren, deren Messung sehr leicht durch externe Magnetfelder gestört werden kann. Kraftfahrzeuge werden in Zukunft und zum Teil schon jetzt, vollständig oder teilweise elektrisch betrieben, was zu hohen externen Feldbeeinflussungsmessungen durch hochstromführende Kabel führen kann, die sich häufig in der Nähe des Lenksystems befinden. Diese Störungen der magnetischen Sensoren können somit das Lenkgefühl und die Robustheit der Lenkung negativ beeinflussen.

Aus der WO 2008/077861 A1 ist ein Lenkwinkel- und Drehmomentsensor bekannt, der einen Feldgeberring mit einem magnetischen Nordpol und einem magnetischen Südpol aufweist, wobei dem Feldgeberring um 90° zueinander versetzte Hall-Sensoren zugeordnet sind. Weiter ist aus der JP 2017-191093 A eine elektrische Servo-Lenkvorrichtung mit einer Drehungserfassungsvorrichtung bekannt, wobei die Drehungserfassungsvorrichtung ausgebildet ist, unter Verwendung von Magnetsensoren magnetische Änderungen basierend auf einer Drehung einer Motorwelle zu messen. Eine weitere Winkelsensoreinheit, die auf einer Änderung des magnetischen Feldes basiert, wird in der US 2015/0239501 A1 offenbart. Zudem ist aus der DE 10 2017 122 475 A1 ein Winkelsensor bekannt, der mehrere Magnetfeldinformationen erfassen und auswerten kann, sodass ein durch ein Störmagnetfeld hervorgerufener Fehler reduziert werden kann. Die DE 10 2017 122 475 A1 offenbart des Weiteren den Oberbegriff der unabhängigen Ansprüche 1 und 4.

Es ist Aufgabe der vorliegenden Erfindung ein Verfahren zur Bestimmung eines Drehwinkels und eine Winkelsensoreinheit anzugeben, mit denen eine erhöhte Genauigkeit und ein verringerter Einfluss eines vorhandenen magnetischen Störfeldes auf die Ermittlung des Drehwinkelwertes realisiert werden kann. Diese Aufgabe wird von einem Verfahren zur Bestimmung eines Drehwinkels der Drehlage einer Rotorwelle eines Elektromotors einer Kraftfahrzeuglenkung mit den Merkmalen des Anspruchs 1 und einer Winkelsensoreinheit mit den Merkmalen des Anspruchs 4 gelöst.

Es ist ein Verfahren zur Bestimmung eines korrigierten Drehwinkels der Drehlage einer drehbar gelagerten Lenkwelle eines Kraftfahrzeuges mit einer Winkelsensoreinheit aufweisend einen zweipoligen Magneten, der mit einem Ende der Lenkwelle drehfest verbindbar ist und der zwei bezüglich einer Magnetachse gegenüberliegende Pole aufweist, vorgesehen, wobei die Magnetachse einer Drehachse der Lenkwelle entspricht, und die Winkelsensoreinheit weiterhin zwei magnetfeldrichtungsabhängige Magnetfeldsensoren, die dem Magneten zugeordnet sind und eine Auswerteeinheit umfasst, die dazu eingerichtet ist, anhand der Signale der zwei Magnetfeldsensoren einen Drehwinkel zu bestimmen, wobei die zwei Magnetfeldsensoren mit ihren sensitiven Sensorflächen parallel zur Außenfläche des Magneten und in zwei unterschiedlichen Abständen zum Magneten angeordnet sind und die Mitten der Magnetfeldsensoren auf der Magnetachse liegen und das Verfahren folgende Schritte umfasst:
- Messen einer ersten Magnetfeldrichtung mittels des ersten Magnetfeldsensors in Form von Sinus- und Cosinussignalen,
- Messen einer zweiten Magnetfeldrichtung mittels des zweiten Magnetfeldsensors in Form von Sinus- und Cosinussignalen,
- Bestimmen einer ersten Magnetflussdichte des von dem Magneten ausgehenden Magnetfeldes im Bereich des ersten Magnetfeldsensors,
- Bestimmen einer zweiten Magnetflussdichte des von dem Magneten ausgehenden Magnetfeldes im Bereich des zweiten Magnetfeldsensors,
- Bilden einer gewichteten Differenz zwischen den jeweils gemessenen Sinus- und Cosinussignalen, wobei die Gewichtung mittels der ersten und zweiten Magnetflussdichte erfolgt, und
- Ermitteln des störfreien Drehwinkels aus den Differenzsignalen unabhängig von einem externen magnetischen Störfeld mittels einer arctan-Funktion.

Eine solche Arkustangens-Bestimmung kann beispielsweise auf der Basis von Nachschlagtabellen, einem CORDIC-Algorithmus (CORDIC = Coordinate Rotation Digital Computer = Digitalcomputer zur Koordinatenrotation) oder einer ähnlichen Implementation implementiert werden. Es ergeben sich durch das Verfahren die zuvor genannten Vorteile.

Erfindungsgemäß sind weiterhin folgende Schritte vorgesehen:
- Ermitteln eines Drehwinkels aus den Signalen des jeweiligen Sensors mittels einer arctan-Funktion,
- Überprüfen des korrigierten Drehwinkels anhand der aus den Signalen der Sensoren ermittelten Drehwinkel.

Vorzugsweise erfolgt eine Plausibilitätsprüfung bei der Überprüfung, die den korrigierten Drehwinkel an die Motorsteuerung nur weitergibt, wenn dieser plausibel erscheint.

Bevorzugt werden die erste und zweite Magnetflussdichte berechnet.

Zudem ist eine Winkelsensoreinheit zur Messung eines Drehwinkels der Drehlage einer Lenkwelle eines Kraftfahrzeuges vorgesehen, aufweisend einen zweipoligen Magneten, der mit einem Ende der Lenkwelle drehfest verbindbar ist und der zwei bezüglich einer Magnetachse gegenüberliegende Pole aufweist, wobei die Magnetachse einer Drehachse der Lenkwelle entspricht. Die Winkelsensoreinheit umfasst weiterhin zwei magnetfeldrichtungsabhängige Magnetfeldsensoren, die dem Magneten zugeordnet sind, wobei die zwei Magnetfeldsensoren mit ihren sensitiven Sensorflächen parallel zur Außenfläche des Magneten und in zwei unterschiedlichen Abständen zum Magneten angeordnet sind und die Mitten der Magnetfeldsensoren auf der Magnetachse liegen. Weiterhin ist eine Auswerteeinheit umfasst, die dazu eingerichtet ist, anhand der Signale der zwei Magnetfeldsensoren und der jeweils im Bereich der beiden Magnetfeldsensoren vorliegenden magnetischen Flussdichte des von dem Magneten ausgehenden Magnetfeldes einen Drehwinkel zu bestimmen. Die Flussdichten des Magnetfeldes im Bereich der beiden Sensoren können mittels der bekannten Geometrie berechnet werden. Die beiden magnetfeldrichtungsabhängigen Sensoren ermöglichen es, Streufeldstörungen durch differentielle Messungen zu eliminieren und somit einen störfreien Drehwinkel zu bestimmen, denn es wird angenommen, dass das Störfeld im Bereich beider Sensoren homogen ist. Vorzugsweise ist der Abstand zwischen den Magnetfeldsensoren zwischen 1 und 5mm. In diesem Bereich kann angenommen werden, dass das externe magnetische Störfeld annähernd gleich ist.

Vorzugsweise sind die Magnetfeldsensoren AMR, GMR oder TMR.

In einer bevorzugten Ausführungsform sind die Magnetfeldsensoren auf gegenüberliegenden Seiten einer Leiterplatte angeordnet.

Bevorzugt ist der zweipolige Magnet ein Dauermagnet.

Die Auswerteeinheit ist vorzugsweise dazu eingerichtet, einen Drehwinkel unabhängig von einem externen magnetischen Störfeld durch Differenzbildung der Signale der beiden Magnetfeldsensoren zu bestimmen.

Weiterhin ist eine elektromechanische Hilfskraftlenkung für ein Kraftfahrzeug, umfassend eine Lenkwelle, die drehbar um eine Lenkwellendrehachse gelagert ist und verschiedene Drehlagen einnehmen kann, einen Elektromotor zur Unterstützung einer Lenkbewegung und eine zuvor genannte Winkelsensoreinheit, vorgesehen.

Die zuvor genannte Winkelsensoreinheit kann auch in einem Steer-by-Wire-Lenksystem für Kraftfahrzeuge aufweisend einen auf die gelenkten Räder wirkenden, in Abhängigkeit eines Fahrerlenkwunsches elektronisch geregelten Lenksteller, einen Rückwirkungen der Straße auf ein Steuer übertragenden Feedback-Aktuator, eine Steuereinheit, die den Feedback-Aktuator und den Lenksteller ansteuert, eingesetzt werden.

Bevorzugte Ausführungsformen der Erfindung werden nachfolgend anhand der Zeichnungen näher erläutert. Gleiche bzw. funktionsgleiche Bauteile sind dabei figurübergreifend mit denselben Bezugszeichen versehen. Es zeigen:
- Fig. 1:: eine schematische Darstellung einer elektromechanischen Kraftfahrzeuglenkung,
- Fig. 2:: eine schematische Darstellung eines erfindungsgemäßen Lenkwinkelsensors mit zwei Sensoren und einem zweipoligen Magnet,
- Fig. 3:: eine schematische Darstellung der Komponenten des Magnetfeldes im Bereich der beiden Sensoren, sowie
- Fig. 4:: ein Blockdiagramm zur Berechnung des Drehwinkels mittels des Lenkwinkelsensors der Figur 2.

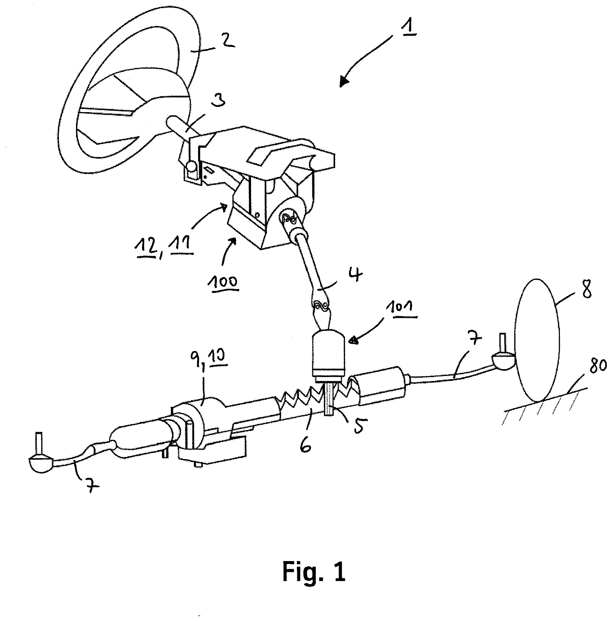

In der Figur 1 ist eine elektromechanische Kraftfahrzeugservolenkung 1 mit einem Lenkrad 2, das mit einer oberen Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Die obere Lenkwelle 3 und die untere Lenkwelle 4 sind drehelastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. Die Drehmomentsensoreinheit 11 umfasst eine Lenkwinkelsensoreinheit 12. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt.

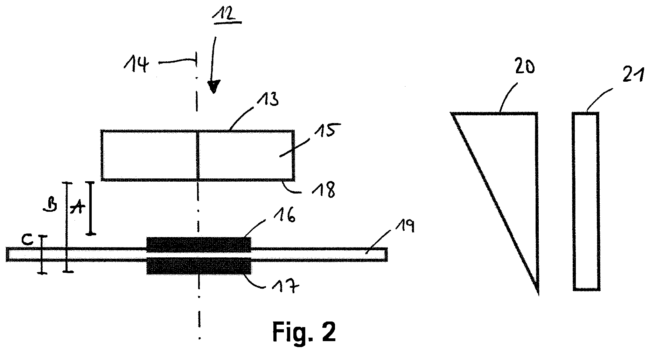

In der Figur 2 ist schematisch eine Lenkwinkelsensoreinheit 12 dargestellt. Ein zweipoliger Magnet 13 ist an einem Ende einer nicht dargestellten Welle angeordnet und mit dieser drehfest verbunden. Die Welle rotiert um eine Drehachse. Der zweipolige Magnet 13 ist eine Dauermagnetanordnung und quader- oder plattenförmig ausgebildet und weist zwei bezüglich der Drehachse, die der Magnetachse 14 entspricht, diametral gegenüberliegende Pole 15 (ein Poolpar) auf.

Es sind zwei magnetfeldrichtungsabhängige Sensoren 16,17 vorgesehen, die die Richtung des Magnetfeldes messen, bei diesen Sensoren handelt es sich bevorzugt um AMR, GMR, TMR-Sensoren oder dergleichen. Die magnetische Flussdichte des von dem zweipoligen Magnet 13 ausgehenden Magnetfeldes im Bereich beiden Sensoren 16,17 wird bestimmt, bevorzugt berechnet. Ein erster Sensor 16 ist in einem Abstand A zu einer Außenfläche 18 des Magneten 13 angeordnet und zwar so, dass auch seine Mitte auf der Magnetachse 14 liegt. Ein zweiter Sensor ist in einem Abstand B zu der Außenfläche 18 des Magneten 13 angeordnet. Ebenfalls mit seiner Mitte auf der Magnetachse 14 liegend. Die beiden Sensoren 16,17 sind dabei bevorzugt auf gegenüberliegenden Seiten einer Leiterplatte 19 angeordnet und weisen einen Abstand C zwischen ihren sensitiven Sensorflächen auf. Die Sensoren 16,17 werden mittels SMD-Technologie auf der Leiterplatte platziert. Die Sensorflächen sind dabei parallel zur Außenfläche 18 des Magneten 13 orientiert. Die beiden Sensoren 16,17 messen die zueinander senkrecht stehenden Komponenten des Magnetfeldes in der Ebene senkrecht zur Drehachse 14. Durch relatives Verdrehen des Magneten 13 um die Drehachse 14 erfahren die Sensoren 16,17 eine Änderung der Richtung des Magnetfeldes und erzeugen ein entsprechendes Ausgangssignal, das der aktuellen relativen Richtung des Magnetfeldes zu den Sensoren 16,17 proportional ist. Die Winkelbestimmung erfolgt mittels einer Arcustangensfunktion aus den gemessenen Sinus- und Cosinussignalen. Die magnetische Flussdichte des von dem Dauermagneten 13 erzeugten Magnetfeldes ist für die beiden Sensoren 16,17 aufgrund des unterschiedlichen Abstands A,B verschieden, aber die Richtung des magnetischen Flusses ist gleich. Die Abnahme der magnetischen Feldstärke 20 des Dauermagneten mit dem Abstand ist in der Figur 2, am rechten Rand schematisch als spitz zulaufendes Dreieck dargestellt. Liegt nun ein magnetisches Störfeld durch beispielsweise hochstromführende Kabel in der Nähe der Lenkung vor, so kann durch Differenzbildung der Signale der beiden Sensoren 16,17, ein störungsfreies Signal gebildet werden. Denn es kann angenommen werden, dass der Abstand C zwischen den sensitiven Sensorflächen so gering ist, dass ein externes magnetisches Störfeld im Bereich beider Sensoren gleich ist. Die gleichbleibende magnetische Feldstärke des Störfeldes 21 ist ebenfalls schematisch in der Figur 2 dargestellt.

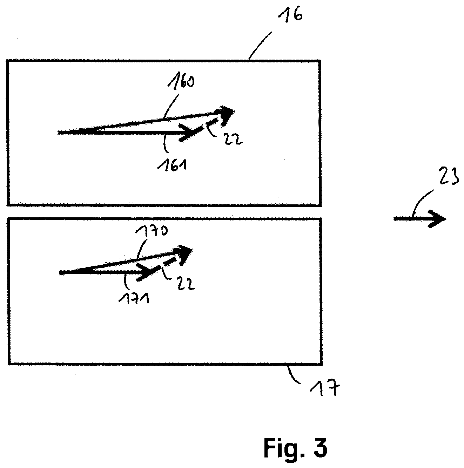

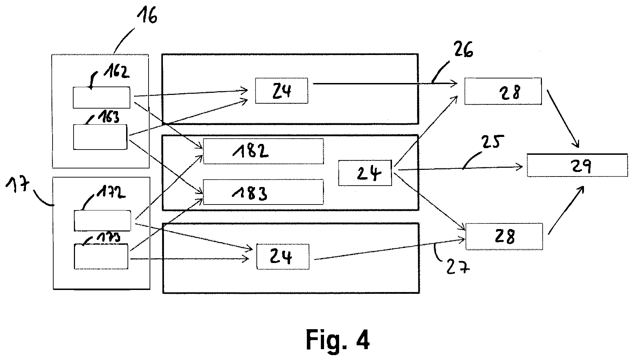

Figur 3 zeigt schematisch den von den beiden Sensoren 16,17 gemessenen magnetischen Feldvektor 160,170, der sich jeweils als Addition aus dem Feldvektor des von dem Dauermagneten ausgehenden Magnetfelds 161,171 und dem Feldvektor des Störfelds 22 ergibt. Die Länge der magnetischen Feldvektoren 160,170 ergibt sich aus der im Bereich der Sensoren vorliegenden Flussdichte des von dem Magneten 14 ausgehenden Magnetfeldes, die bekannt ist. Das störungsfreie Signal 23 wird, wie in Figur 4 im Detail dargestellt berechnet. Demnach werden jeweils die Sinus- und Cosinussignale 162,172,163,173 der beiden Sensoren 16,17 voneinander gewichtet abgezogen 182,183, um störfreie Signale zu erhalten. Die beiden Sensoren 16,17 liefern nur einen Richtungseinheitsvektor. Dessen Länge an die Flussdichte des störungsfreien Magnetfeldes im Bereich der Sensoren angepasst werden muss. Die Signale der Sensoren 16,17 werden daher vor der Subtraktion mittels der Informationen über die Flussdichte gewichtet. Anschließend wird mittels des störfreien Sinus- und Cosinussignale 182,183 unter Verwendung einer arctan-Funktion 24 der korrigierte Drehwinkel 25 berechnet. Zudem wird der Drehwinkel 26,27 jeweils aus den Signalen der beiden einzelnen Sensoren zur Gegenprobe 28 bestimmt. Wenn der störfreie, korrigierte Drehwinkel 25 bei der Gegenprobe plausibel erscheint, wird er an eine Motorsteuerung 29 eines Elektromotors weitergegeben. Falls dies nicht der Fall ist, können auch die herkömmlicherweise ermittelten Drehwinkel 26,27 für die Motorsteuerung verwendet werden. Bei elektromechanischen Hilfskraftlenkungen wird in Abhängigkeit des Drehwinkels eine mittels des Elektromotors bereitgestellte Hilfskraftunterstützung bestimmt. Es kann aber auch vorgesehen sein, die Lenkwinkelsensoreinheit in einer Steer-by-Wire Lenkung einzusetzen.

## Patentansprüche

1. Verfahren zur Bestimmung eines korrigierten Drehwinkels der Drehlage einer drehbar gelagerten Lenkwelle (3,4) eines Kraftfahrzeuges mit einer Winkelsensoreinheit (12) aufweisend
- einen zweipoligen Magneten (13), der mit einem Ende der Lenkwelle (3,4) drehfest verbindbar ist und der zwei bezüglich einer Magnetachse (14) gegenüberliegende Pole (15) aufweist, wobei die Magnetachse (14) einer Drehachse der Lenkwelle (3,4) entspricht,
- zwei magnetfeldrichtungsabhängige Magnetfeldsensoren (16,17), die dem Magneten (13) zugeordnet sind und
- eine Auswerteeinheit, die dazu eingerichtet ist, mittels der Signale der zwei Magnetfeldsensoren (16,17) einen Drehwinkel zu bestimmen, wobei die zwei Magnetfeldsensoren (16,17) mit ihren sensitiven Sensorflächen parallel zur Außenfläche des Magneten (13) und in zwei unterschiedlichen Abständen zum Magneten (13) angeordnet sind und die Mitten der Magnetfeldsensoren (16,17) auf der Magnetachse (14) liegen und das Verfahren folgende Schritte umfasst:
• Messen einer ersten Magnetfeldrichtung mittels des ersten Magnetfeldsensors (16) in Form von Sinus- und Cosinussignalen (182),
• Messen einer zweiten Magnetfeldrichtung mittels des zweiten Magnetfeldsensors (17) in Form von Sinus- und Cosinussignalen (183),
• Bestimmen einer ersten Magnetflussdichte des von dem Magneten ausgehenden Magnetfeldes im Bereich des ersten Magnetfeldsensors (16),
• Bestimmen einer zweiten Magnetflussdichte des von dem Magneten ausgehenden Magnetfeldes im Bereich des zweiten Magnetfeldsensors (16),
• Bilden einer gewichteten Differenz zwischen den jeweils gemessenen Sinus- und Cosinussignalen (182,183), wobei die Gewichtung mittels der ersten und zweiten Magnetflussdichte erfolgt, und
• Ermitteln des störfreien Drehwinkels aus den Differenzsignalen (182,183) unabhängig von einem externen magnetischen Störfeld mittels einer arctan-Funktion (24) **dadurch gekennzeichnet, dass** folgende weitere Schritte vorgesehen sind:
• Ermitteln eines Drehwinkels aus den Signalen des jeweiligen Sensors (162,163,172,173) mittels einer arctan-Funktion (24),
• Überprüfen des korrigierten Drehwinkels anhand der aus den Signalen der Sensoren ermittelten Drehwinkel.

2. Verfahren nach Anspruch 1, **dadurch gekennzeichnet, dass** folgender weiterer Schritt vorgesehen ist:
• Verwenden des korrigierten Drehwinkels in einer Motorsteuerung (29), wenn der korrigierte Drehwinkel bei der Überprüfung plausibel erscheint.

3. Verfahren nach einem der Ansprüche 1 oder 2, **dadurch gekennzeichnet, dass** die erste und zweite Magnetflussdichte berechnet werden.

4. Winkelsensoreinheit (12) zur Bestimmung eines Drehwinkels der Drehlage einer Lenkwelle (3,4) eines Kraftfahrzeuges aufweisend
- einen zweipoligen Magneten (13), der mit einem Ende der Lenkwelle (3,4) drehfest verbindbar ist und der zwei bezüglich einer Magnetachse (14) gegenüberliegende Pole (15) aufweist, wobei die Magnetachse (14) einer Drehachse der Lenkwelle (3,4) entspricht,
- zwei magnetfeldrichtungsabhängige Magnetfeldsensoren (16,17), die dem Magneten (13) zugeordnet sind,
**dadurch gekennzeichnet, dass** die zwei Magnetfeldsensoren (16,17) mit ihren sensitiven Sensorflächen parallel zur Außenfläche (18) des Magneten (13) und in zwei unterschiedlichen Abständen (A,B) zum Magneten (13) angeordnet sind und die Mitten der Magnetfeldsensoren (16,17) auf der Magnetachse (14) liegen und dass die Winkelsensoreinheit eine Auswerteeinheit aufweist, die dazu eingerichtet ist, anhand der Signale der zwei Magnetfeldsensoren (16,17) und der jeweils im Bereich der beiden Magnetfeldsensoren (16,17) vorliegenden magnetischen Flussdichte des von dem Magneten (13) ausgehenden Magnetfeldes gemäß einem Verfahren nach einem der Ansprüche 1 bis 3 einen Drehwinkel zu bestimmen.

5. Winkelsensoreinheit nach Anspruch 4, **dadurch gekennzeichnet, dass** der Abstand zwischen den Magnetfeldsensoren (16,17) zwischen 1mm und 5mm ist.

6. Winkelsensoreinheit nach Anspruch 4 oder 5, **dadurch gekennzeichnet, dass** die Magnetfeldsensoren (16,17) AMR, GMR oder TMR sind.

7. Winkelsensoreinheit nach einem der Ansprüche 4 bis 6, **dadurch gekennzeichnet, dass** die Magnetfeldsensoren (16,17) auf gegenüberliegenden Seiten einer Leiterplatte (19) angeordnet sind.

8. Winkelsensoreinheit nach einem der Ansprüche 4 bis 7, **dadurch gekennzeichnet, dass** der zweipolige Magnet (13) ein Dauermagnet ist.

9. Winkelsensoreinheit nach einem der Ansprüche 4 bis 8, **dadurch gekennzeichnet, dass** die Auswerteeinheit dazu eingerichtet ist, einen Drehwinkel unabhängig von einem externen magnetischen Störfeld durch Differenzbildung der mittels der Flussdichte des von dem Magneten (13) ausgehenden Magnetfeldes gewichteten Signale der beiden Magnetfeldsensoren (16,17) zu bestimmen.

10. Elektromechanische Hilfskraftlenkung für ein Kraftfahrzeug, umfassend eine Lenkwelle (3,4) die drehbar um eine Lenkwellendrehachse gelagert ist und verschiedene Drehlagen einnehmen kann, einen Elektromotor (9) zur Unterstützung einer Lenkbewegung und eine Winkelsensoreinheit (12) gemäß einem der Ansprüche 4 bis 9.

11. Steer-by-Wire-Lenksystem für Kraftfahrzeuge aufweisend einen auf die gelenkten Räder wirkenden, in Abhängigkeit eines Fahrerlenkwunsches elektronisch geregelten Lenksteller, einen Rückwirkungen der Straße auf ein Steuer übertragenden Feedback-Aktuator, eine Steuereinheit, die den Feedback-Aktuator und den Lenksteller ansteuert, und eine Winkelsensoreinheit (12) gemäß einem der Ansprüche 4 bis 9.

## Claims

1. A method for determining a corrected rotational angle of the rotational position of a rotationally mounted steering shaft (3,4) of a motor vehicle with an angle sensor unit (12), having
- a two-pole magnet (13) which can be connected in a torque-proof manner to one end of the steering shaft (3,4) and which has two poles (15) which are opposite one another with respect to a magnetic axis (14), wherein the magnetic axis (14) corresponds to a rotational axis of the steering shaft (3,4),
- two magnetic-field-direction-dependent magnetic field sensors (16,17) which are assigned to the magnet (13), and
- an evaluation unit which is configured to determine a rotational angle by means of the signals of the two magnetic field sensors (16,17), wherein the two magnetic field sensors (16,17) are arranged with their sensitive sensor faces parallel to the external face of the magnet (13) and at two different distances from the magnet (13), and the centers of the magnetic field sensors (16,17) are located on the magnetic axis (14), and the method comprises the following steps:
• Measuring a first magnetic field direction by means of the first magnetic field sensor (16) in the form of sine and cosine signals (182),
• Measuring a second magnetic field direction by means of the second magnetic field sensor (17) in the form of sine and cosine signals (183),
• Determining a first magnetic flux density of the magnetic field, originating from the magnet, in the region of the first magnetic field sensor (16),
• Determining a second magnetic flux density of the magnetic field, originating from the magnet, in the region of the second magnetic flux sensor (16),
• Forming a weighted difference between the respectively measured sine and cosine signals (182,183), wherein the weighting is carried out by means of the first and second magnetic flux densities, and
• Determining the interference-free rotational angle from the difference signals (182,183) independently of an external magnetic interference field by means of an arctan function (24), **characterized in that** the following further steps are provided:
• Determining a rotational angle from the signals of the respective sensor (162,163,172,173) by means of an arctan function (24),
• Checking the corrected rotational angle on the basis of the rotational angles determined from the signals of the sensors.

2. The method as claimed in claim 1, **characterized in that** the following further step is provided:
• Using the corrected rotational angle in a motor controller (29) if the corrected rotational angle appears plausible during the checking.

3. The method as claimed in claim 1 or 2, **characterized in that** the first and second magnetic flux densities are calculated.

4. An angle sensor unit (12) for determining a rotational angle of the rotational position of a steering shaft (3,4) of a motor vehicle, having
- a two-pole magnet (15) which can be connected to one end of the steering shaft (3,4) in a torque-proof manner and which has two poles (15) which are opposite one another with respect to a magnetic axis (14), wherein the magnetic axis (14) corresponds to a rotational axis of the steering shaft (3,4),
- two magnetic-field-direction-dependent magnetic field sensors (16,17) which are assigned to the magnet (13),
**characterized in that** the two magnetic field sensors (16,17) are arranged with their sensitive sensor faces parallel to the external face (18) of the magnet (13) and at two different distances (A,B) from the magnet (13), and the centers of the magnetic field sensors (16,17) are located on the magnetic axis (14), and **in that** the angle sensor unit has an evaluation unit which is configured to determine a rotational angle according to the method of one of claims 1 to 3 on the basis of the signals of the two magnetic field sensors (16,17) and the magnetic flux density, which is respectively present in the region of the two magnetic field sensors (16,17), of the magnetic field originating from the magnet (13).

5. The angle sensor unit as claimed in claim 4, **characterized in that** the distance between the magnetic field sensors (16,17) is between 1 mm and 5 mm.

6. The angle sensor unit as claimed in claim 4 or 5, **characterized in that** the magnetic field sensors (16,17) are AMR, GMR or TMR.

7. The angle sensor unit as claimed in one of claims 4 to 6, **characterized in that** the magnetic field sensors (16,17) are arranged on opposite sides of a circuit board (19).

8. The angle sensor unit as claimed in one of the claims 4 to 7, **characterized in that** the two-pole magnet (13) is a permanent magnet.

9. The angle sensor unit as claimed in one of the claims 4 to 8, **characterized in that** the evaluation unit is configured to determine a rotational angle independently of an external magnetic interference field by forming difference between the signals of the two magnetic field sensors (16,17) which are weighted by means of the flux density of the magnetic field originating from the magnet (13).

10. An electromechanical power steering system for a motor vehicle, comprising a steering shaft (3,4) which is mounted so as to be rotatable about a steering shaft rotational axis and can take various rotational positions, an electric motor (9) for assisting a steering movement and an angle sensor unit (12) as claimed in one of claims 4 to 9.

11. A steer-by-wire steering system for motor vehicles having a steering actuator which acts on the steered wheels and is electronically controlled as a function of a driver's steering request, a feedback actuator which transmits reactions of the road to a steering device, a control unit which controls the feedback actuator and the steering actuator, and an angle sensor unit (12) as claimed in one of claims 4 to 9.

## Revendications

1. Procédé pour déterminer un angle de rotation corrigé de la position de rotation d'un arbre de direction (3, 4) monté rotatif d'un véhicule automobile avec une unité de capteur d'angle (12) présentant
- un aimant bipolaire (13) qui peut être relié de manière solidaire en rotation à une extrémité de l'arbre de direction (3, 4) et qui présente deux pôles (15) opposés par rapport à un axe magnétique (14), l'axe magnétique (14) correspondant à un axe de rotation de l'arbre de direction (3, 4),
- deux capteurs de champ magnétique (16, 17) dépendant de la direction du champ magnétique, qui sont associés à l'aimant (13) et
- une unité d'évaluation qui est conçue pour déterminer un angle de rotation au moyen des signaux des deux capteurs de champ magnétique (16, 17), les deux capteurs de champ magnétique (16, 17) étant disposés avec leurs surfaces de capteur sensibles parallèlement à la surface extérieure de l'aimant (13) et à deux distances différentes de l'aimant (13) et les centres des capteurs de champ magnétique (16, 17) étant situés sur l'axe magnétique (14) et le procédé comprenant les étapes suivantes :
• mesurer une première direction de champ magnétique au moyen du premier capteur de champ magnétique (16) sous la forme de signaux sinusoïdaux et cosinusoïdaux (182),
• mesurer une deuxième direction de champ magnétique au moyen du deuxième capteur de champ magnétique (17) sous la forme de signaux sinusoïdaux et cosinusoïdaux (183),
• déterminer une première densité de flux magnétique du champ magnétique émanant de l'aimant dans la zone du premier capteur de champ magnétique (16),
• déterminer une deuxième densité de flux magnétique du champ magnétique émanant de l'aimant dans la zone du deuxième capteur de champ magnétique (16),
• former une différence pondérée entre les signaux sinusoïdaux et cosinusoïdaux (182, 183) respectivement mesurés, la pondération étant effectuée au moyen des première et deuxième densités de flux magnétique, et
• Détermination de l'angle de rotation sans perturbation à partir des signaux différentiels (182, 183) indépendamment d'un champ magnétique perturbateur externe au moyen d'une fonction arctan (24), **caractérisée en ce que** les étapes supplémentaires suivantes sont prévues :
• déterminer un angle de rotation à partir des signaux du capteur respectif (162, 163, 172, 173) au moyen d'une fonction arctan (24),
• Vérifier l'angle de rotation corrigé à l'aide des angles de rotation déterminés à partir des signaux des capteurs.

2. Procédé selon la revendication 1, **caractérisé en ce que** l'étape supplémentaire suivante est prévue :
• Utiliser l'angle de rotation corrigé dans une commande de moteur (29) si l'angle de rotation corrigé semble plausible lors du contrôle.

3. Procédé selon l'une des revendications 1 ou 2, **caractérisé en ce que** la première et la deuxième densité de flux magnétique sont calculées.

4. Unité de capteur d'angle (12) pour déterminer un angle de rotation de la position de rotation d'un arbre de direction (3, 4) d'un véhicule automobile, présentant
- un aimant bipolaire (13) qui peut être relié de manière solidaire en rotation à une extrémité de l'arbre de direction (3, 4) et qui présente deux pôles (15) opposés par rapport à un axe magnétique (14), l'axe magnétique (14) correspondant à un axe de rotation de l'arbre de direction (3, 4),
- deux capteurs de champ magnétique (16, 17) dépendant de la direction du champ magnétique, qui sont associés à l'aimant (13),
**caractérisé en ce que** les deux capteurs de champ magnétique (16, 17) sont disposés avec leurs surfaces de capteur sensibles parallèlement à la surface extérieure (18) de l'aimant (13) et à deux distances différentes (A, B) de l'aimant (13) et les centres des capteurs de champ magnétique (16, 17) se trouvent sur l'axe magnétique (14) et **en ce que** l'unité de capteur angulaire présente une unité d'évaluation, qui est conçue pour déterminer un angle de rotation à l'aide des signaux des deux capteurs de champ magnétique (16, 17) et de la densité de flux magnétique du champ magnétique émis par l'aimant (13), présente respectivement dans la zone des deux capteurs de champ magnétique (16, 17), selon un procédé selon l'une des revendications 1 à 3.

5. Unité de capteur d'angle selon la revendication 4, **caractérisée en ce que** la distance entre les capteurs de champ magnétique (16, 17) est comprise entre 1mm et 5mm.

6. Unité de capteur angulaire selon la revendication 4 ou 5, **caractérisée en ce que** les capteurs de champ magnétique (16, 17) sont des AMR, des GMR ou des TMR.

7. Unité de capteur d'angle selon l'une des revendications 4 à 6, **caractérisée en ce que** les capteurs de champ magnétique (16, 17) sont disposés sur des côtés opposés d'une carte de circuit imprimé (19).

8. Unité de capteur d'angle selon l'une des revendications 4 à 7, **caractérisée en ce que** l'aimant bipolaire (13) est un aimant permanent.

9. Unité de capteur d'angle selon l'une des revendications 4 à 8, **caractérisée en ce que** l'unité d'évaluation est conçue pour déterminer un angle de rotation indépendamment d'un champ magnétique parasite externe par formation de la différence des signaux des deux capteurs de champ magnétique (16, 17) pondérés au moyen de la densité de flux du champ magnétique émis par l'aimant (13).

10. Système de direction assistée électromécanique pour un véhicule automobile, comprenant un arbre de direction (3, 4) monté à rotation autour d'un axe de rotation de l'arbre de direction et pouvant prendre différentes positions de rotation, un moteur électrique (9) d'assistance au mouvement de direction et une unité de capteur d'angle (12) selon l'une quelconque des revendications 4 à 9.

11. Système de direction Steer-by-Wire pour véhicules automobiles, présentant un actionneur de direction agissant sur les roues directrices et régulé électroniquement en fonction d'une volonté de direction du conducteur, un actionneur à rétroaction transmettant des réactions de la route à une commande, une unité de commande qui commande l'actionneur à rétroaction et l'actionneur de direction, et une unité de capteur d'angle (12) selon l'une des revendications 4 à 9.
